# FASCICULE DE BREVET EUROPEEN

(11) **EP 0 819 962 B1**
(45) Date de publication et mention de la délivrance du brevet: **27.08.2003**
(21) Numéro de dépôt: 97401514.1
(22) Date de dépôt: 30.06.1997
(51) Int. Cl.: G02B 7/04

(54) **Dispositif de suspension et de guidage en translation pour un appareil et appareil équipé d'un tel dispositif**
Aufhängungs- und translatorische Führungsvorrichtung für ein Gerät und Gerät mit dieser Vorrichtung
Suspension and translational guiding device for an apparatus and apparatus with such a device

(30) Priorité: 16.07.1996 FR 9608848
(43) Date de publication de la demande: 21.01.1998
(73) Titulaire: ALCATEL, 75008 Paris (FR)
(72) Inventeur: Vezain, Gérard, 06210 Mandelieu (FR); Legrand, Silvain, 06300 Nice (FR)
(74) Mandataire: Bonnetat, Christian

(56) Documents cités:
- EP-A- 0 403 354
- US-A- 4 209 233
- PATENT ABSTRACTS OF JAPAN vol. 018, no. 409 (P-1779), 29 juillet 1994 & JP 06 119641 A (CANON INC), 28 avril 1994,

## Description

La présente invention concerne un dispositif de suspension et de guidage en translation pour un appareil destiné à être déplacé, parallèlement à son axe longitudinal (X-X), par rapport à un support fixe, ainsi qu'un tel appareil équipé dudit dispositif.

Quoique non exclusivement, un tel dispositif est plus particulièrement approprié pour être utilisé pour déplacer un appareil faisant lui-même partie d'un instrument optique dans lequel il est nécessaire de déplacer, par exemple, une ou plusieurs lentilles, dans le but d'atteindre une mise au point optimale, ce déplacement devant être réalisé précisément suivant la direction de l'axe optique de la lentille ou des lentilles concernées, sans décentrement ni défaut angulaire.

On connaît déjà, par le brevet FR-2 648 241 de la même demanderesse, un dispositif de suspension et de guidage en translation pour un appareil destiné à être déplacé, parallèlement à son axe longitudinal (X-X), par rapport à un support fixe, du type comportant au moins une paire d'éléments de suspension espacés suivant ledit axe longitudinal (X-X) et agencés au moins sensiblement transversalement audit axe (X-X) en étant souples parallèlement audit axe (X-X), une extrémité de chacun desdits éléments de suspension étant solidaire dudit appareil et une autre extrémité de chacun desdits éléments de suspension étant solidaire dudit support, et des moyens d'actionnement commandables destinés à exercer, sur lesdits éléments de suspension, un effort parallèlement audit axe longitudinal (X,X).

Cependant, dans ce cas, chaque élément de suspension est constitué par une lame souple unique, si bien que, lorsque l'on exerce un effort, parallèlement à l'axe longitudinal (X-X), sur l'ensemble constitué par ces deux lames, il existe un risque de décentrement dudit axe et donc de l'axe optique de la lentille ou des lentilles concernées.

US-A-4 209 233 divulgue un dispositif de guidage ayant un élément de compensation.

La présente invention a pour but d'éviter cet inconvénient.

A cet effet, le dispositif de suspension et de guidage en translation, du type indiqué ci-dessus et dont toutes les caractéristiques apparaissent dans la revendication 1, est remarquable, selon l'invention, en ce que chacun desdits éléments de suspension est constitué d'au moins une paire de lames, une extrémité de l'une desdites lames étant solidaire dudit support et une extrémité de l'autre desdites lames étant solidaire dudit appareil, les autres extrémités desdites lames étant solidaires l'une de l'autre.

Ainsi, grâce à une telle réalisation à "lame double" de chacun des éléments de suspension, l'application d'un effort suivant l'axe longitudinal (X-X) entraîne une déformation des lames, comme cela sera décrit en détail par la suite, et un "décentrement" mais sans effet sur la "position" de l'axe (X-X) du fait que ce "décentrement" affecte, en fait, les extrémités supérieures ("libres") des lames.

Les revendications 2 - 10 concernent des modes de réalisation additionels.

Selon un mode de réalisation additionel de l'invention, pour chaque paire de lames de chaque élément de suspension, une desdites lames se présente sous la forme de deux branches dont l'extrémité inférieure de chacune d'entre elles est fixée audit support, tandis que l'extrémité inférieure de l'autre desdites lames, en une pièce, est fixée à l'extrémité d'une patte solidaire dudit appareil.

De plus, l'extrémité inférieure de chacune desdites branches peut être encastrée dans une pièce d'appui respective, liée audit support, tandis que les branches desdites premières lames peuvent être reliées, à leurs extrémités supérieures, par une lame transversale solidarisant ces dernières entre elles, ainsi qu'à l'extrémité supérieure desdites secondes lames.

Cependant, la souplesse des lames, dans cette solution, peut entraîner, pour une course non nulle des moyens d'actionnement, un décentrement sous l'effet de la pesanteur, de sorte qu'il est avantageux, suivant une variante de l'invention, que chacun desdits éléments de suspension soit constitué par deux paires desdites lames, agencées de façon symétrique par rapport au plan longitudinal médian de l'ensemble formé par les deux dites paires de lames en condition de repos desdits moyens d'actionnement, et que les extrémités supérieures, solidaires l'une de l'autre, de chaque paire de lames dudit ensemble, soient reliées par un élément de solidarisation travaillant en traction/compression.

De préférence, ledit élément de solidarisation est constitué de deux lames dont la largeur s'étend parallèlement à l'axe (X-X), reliant les extrémités supérieures et inférieures, respectivement, desdites lames transversales, en formant ainsi une structure de "poutre ou profilé creux" de section transversale quadrangulaire.

Selon un autre mode de réalisation additionel de l'invention, chaque élément de suspension présente, en condition de repos desdits moyens d'actionnement, une forme générale de W renversé.

Par ailleurs, chaque branche extérieure de l'élément de suspension en forme de W renversé est encastrée dans une pièce d'appui respective liée audit support, tandis que les branches intérieures sont fixées, en commun, à l'extrémité d'une patte solidaire dudit appareil.

Selon encore un autre mode de réalisation additionel de l'invention, le point d'application de l'effort exercé par lesdits moyens d'actionnement sur les lames élastiques s'exerce au moins sensiblement sur l'axe (X-X), de sorte que, si (L) est la distance séparant les extrémités supérieures et inférieures d'encastrement desdites lames, l'axe (X-X) est situé de façon telle que, au moins sensiblement, la distance séparant les extrémités supérieures d'encastrement de l'axe (X-X) est égale à la distance séparant les extrémités inférieures d'encastrement dudit axe, c'est-à-dire à (L/2).

Les figures du dessin annexé feront bien comprendre comment l'invention peut être réalisée. Sur ces figures, des références identiques désignent des éléments semblables.

La figure 1 est une vue en perspective d'un premier exemple de réalisation du dispositif de suspension et de guidage en translation selon l'invention, pour un appareil destiné à être déplacé suivant son axe longitudinal (X-X).

La figure 2 est une vue de côté du dispositif de la figure 1.

La figure 3 illustre la déformation des lames d'un élément de suspension du dispositif des figures 1 et 2, sous l'action d'un effort exercé parallèlement à l'axe (X-X).

La figure 4 est une vue en perspective d'un second mode de réalisation du dispositif de suspension et de guidage en translation selon l'invention.

La figure 5 est une vue de côté du dispositif de la figure 4.

Les figures 6 et 7 illustrent la déformation du dispositif, dans le cas du mode des figures 4 et 5, pour un déplacement de l'appareil, suivant l'axe (X-X), dans les deux sens.

La figure 8 montre la déformation des lames d'un élément de suspension du dispositif des figures 4 et 5, sous l'action d'un effort exercé parallèlement à l'axe (X-X).

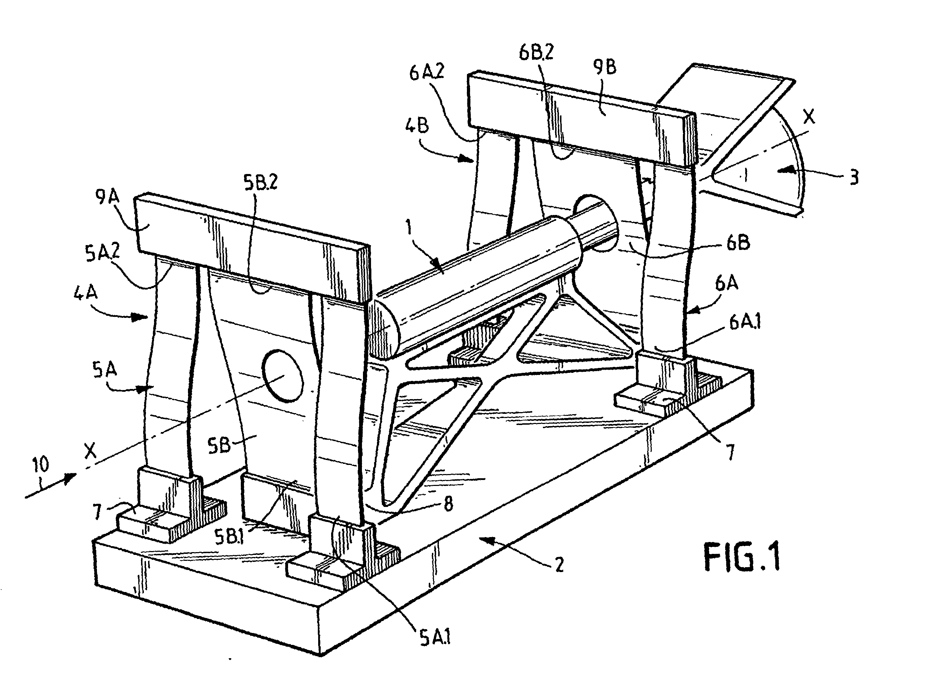

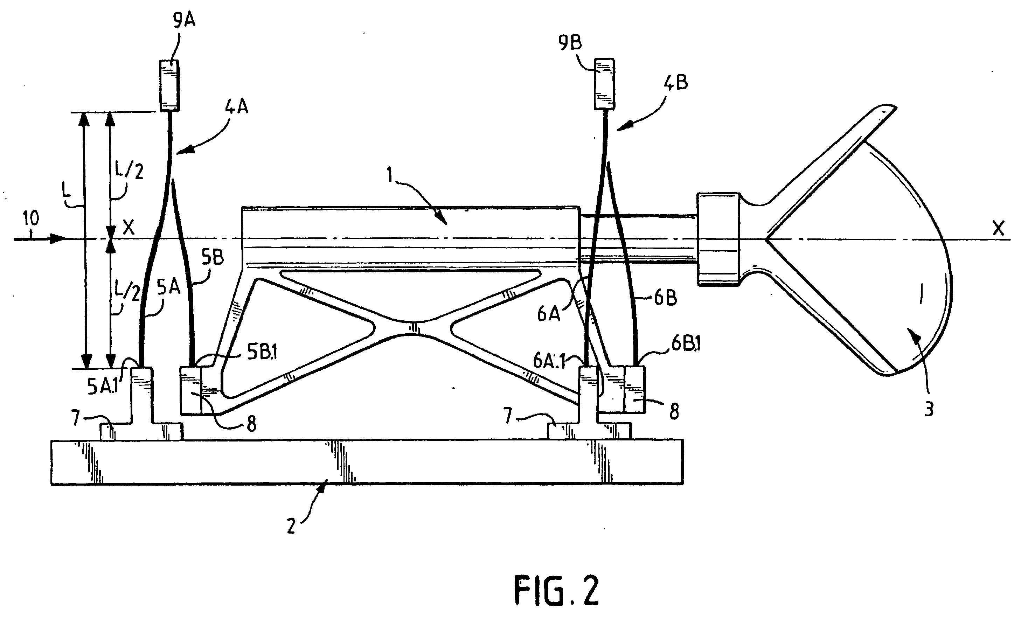

Comme on le voit sur les figures 1 et 2 notamment, le dispositif de suspension et de guidage en translation pour un appareil 1 destiné à être déplacé, parallèlement à son axe longitudinal (X-X), par rapport à un support fixe 2, et apte à porter, en 3, un instrument optique (non représenté), comporte une paire d'éléments de suspension 4A, 4B. Les éléments de suspension 4A, 4B sont espacés suivant l'axe longitudinal (X-X) et agencés au moins sensiblement transversalement audit axe (X-X) en étant souples parallèlement audit axe (X-X). Selon l'invention, conformément à ce premier mode de réalisation, chaque élément de suspension 4A, 4B est constitué d'une paire de lames 5A, 5B ; 6A, 6B, dont une extrémité de l'une desdites lames (5A, respectivement 6A) est solidaire du support 2 et une extrémité de l'autre desdites lames (5B, respectivement 6B) est solidaire de l'appareil 1, les autres extrémités des lames 5A, 5B ; 6A, 6B étant solidaires l'une de l'autre.

Plus précisément, comme on le voit sur la figure 1, les lames 5A, 6A se présentent, chacune, sous la forme de deux branches dont l'extrémité inférieure 5A.1, 6A.1 de chacune d'entre elles est fixée au support 2 en étant, par exemple, encastrée dans une pièce d'appui respective 7, liée au support 2, tandis que l'extrémité inférieure 5B.1, 6B.1 des lames 5B, 6B, en une pièce, est encastrée à l'extrémité d'une patte respective 8 solidaire de l'appareil 1.

Par ailleurs, les branches des lames 5A, 6A sont reliées, à leurs extrémités supérieures 5A.2, 6A.2, par une lame transversale 9A, 9B solidarisant ces dernières entre elles, ainsi qu'à l'extrémité supérieure 5B.2, 6B.2 des lames 5B, 6B.

De plus, comme on le voit sur la figure 2, le point d'application de l'effort exercé par des moyens d'actionnement (uniquement symbolisés par la flèche 10 sur le dessin) sur les lames élastiques doit s'exercer sur l'axe (X-X), de sorte que, si (L) est la distance séparant les extrémités supérieures et inférieures d'encastrement des lames 5A, 5B ; 6A, 6B, l'axe (X-X) est situé de façon telle que, au moins sensiblement, la distance séparant les extrémités supérieures d'encastrement de l'axe (X-X) est égale à la distance séparant les extrémités inférieures d'encastrement de l'axe (X-X), c'est-à-dire à (L/2) ; cela de façon à obtenir un défaut angulaire nul lors de l'application de l'effort.

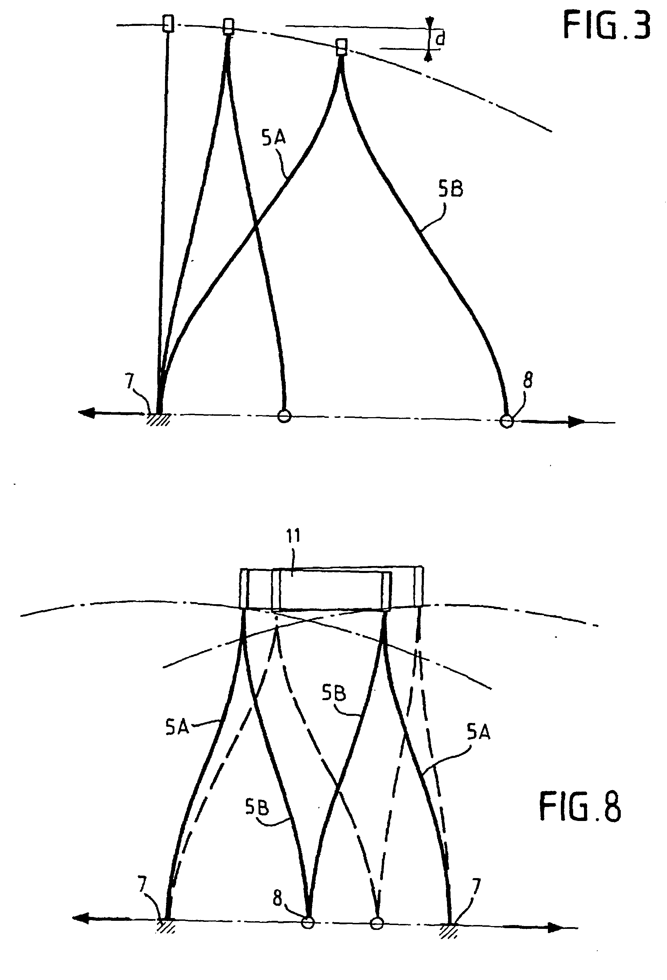

Comme on le voit sur la figure 3, l'application d'un effort suivant l'axe longitudinal (X-X) entraîne effectivement une déformation des lames 5A, 5B ; 6A, 6B et un décentrement d, mais qui ne joue pas sur l'axe (X-X) du fait que le décentrement d affecte les extrémités "libres" (supérieures) des lames.

Toutefois, comme déjà indiqué, si, pour une course nulle des moyens d'actionnement, l'ensemble est bien rigide suivant le sens de la gravité (généralement verticalement) car les lames travaillent alors en traction/compression, une fois la course amorcée, ladite raideur tend à chuter rapidement et cela entraîne des décentrements, sous l'effet de la pesanteur, qui peuvent être importants. Cette souplesse, pour une course non nulle, sous l'effet de la pesanteur peut également se répercuter sur le défaut angulaire.

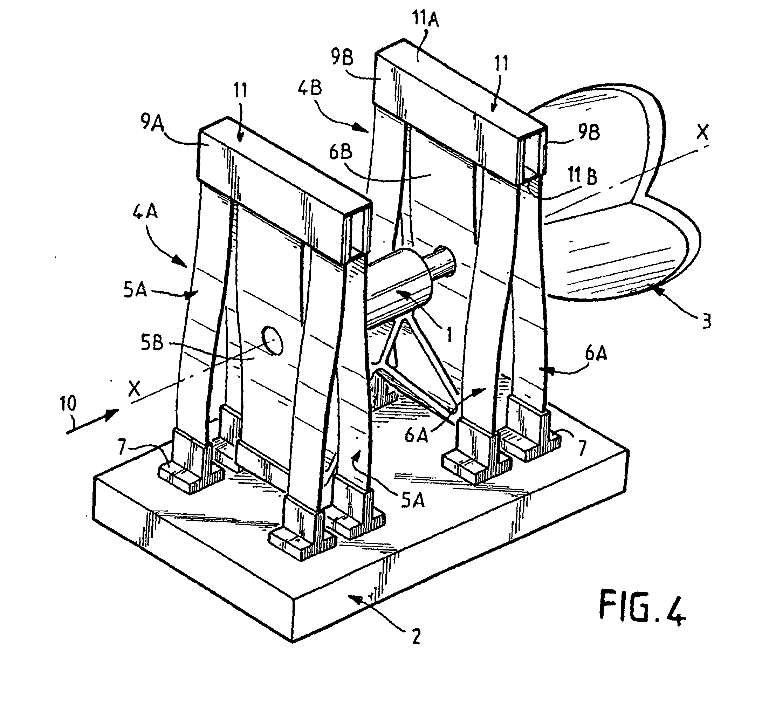

Pour éviter ces inconvénients, on a conçu une réalisation du dispositif de suspension et de guidage en translation, illustrée par les figures 4 à 8, similaire au demeurant à la réalisation précédente, mais dans laquelle chacun des éléments de suspension 4A, 4B est constitué par deux paires de lames 5A, 5B ; 6A, 6B précédemment décrites, agencées de façon symétrique (ou en opposition) par rapport au plan longitudinal médian de l'ensemble formé par les deux dites paires de lames en condition de repos des moyens d'actionnement 10, et dans laquelle les extrémités supérieures, solidaires l'une de l'autre, de chaque paire de lames 5A, 5B ; 5A, 5B, d'une part, et 6A, 6B ; 6A, 6B, d'autre part, sont reliées par un élément de solidarisation 11, travaillant en traction/compression, constitué de deux lames 11A, 11B dont la largeur s'étend parallèlement à l'axe (X-X), reliant les extrémités supérieures et inférieures, respectivement, des lames transversales 9A, 9B. On obtient ainsi une structure de "poutre ou profilé creux" de section transversale quadrangulaire conférant à l'élément de suspension respectif 4A, 4B une raideur très élevée suivant l'axe de la pesanteur et pratiquement constante quelle que soit la course des moyens d'actionnement 10. On doit noter, toutefois, que la présence des lames 11A, 11B peut entraîner de légers décentrements (et, éventuellement, un faible défaut angulaire), mais qui demeurent très faibles : par exemple, inférieurs à 2 micromètres pour une course de ± 10 mm.

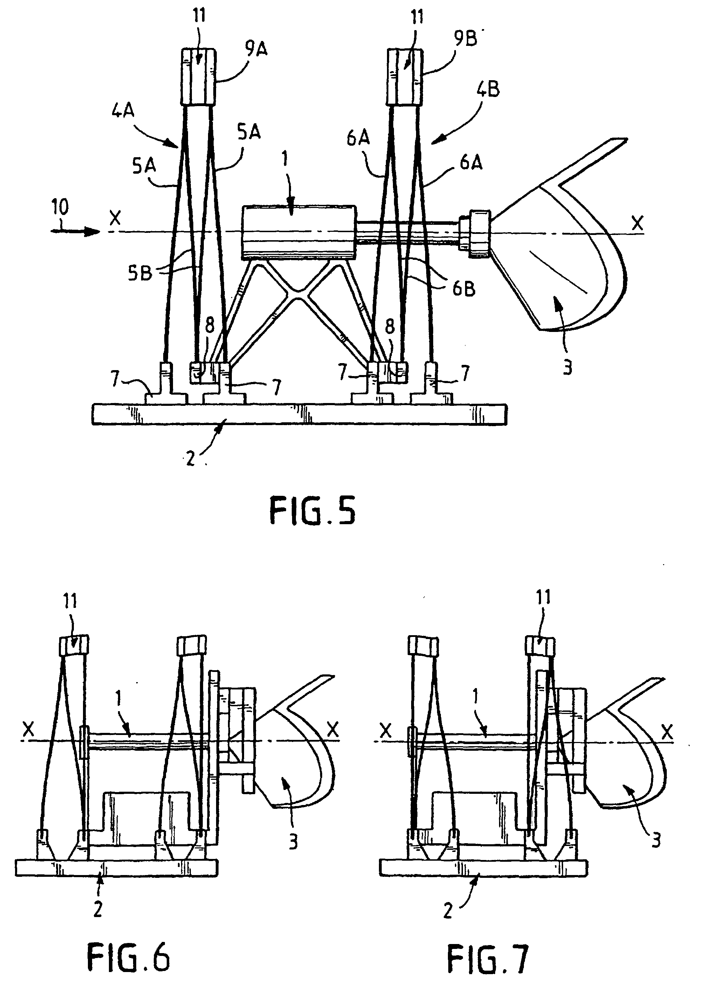

Comme on le voit mieux sur la figure 5, chaque élément de suspension 4A, 4B présente, en condition de repos des moyens d'actionnement 10, une forme générale de W renversé, dont chaque branche "extérieure" est encastrée dans une pièce d'appui respective 7 liée au support 2, tandis que les branches "intérieures" sont fixées, en commun, à l'extrémité d'une patte 8 solidaire de l'appareil 1. On notera, de plus, que, comme dans la première réalisation, les lames ont une longueur et des positions d'encastrement telles que le point d'application de l'effort exercé par les moyens d'actionnement 10 reste "central".

Les figures 6 à 8 illustrent les déformations des lames 5A, 5B ; 6A, 6B pour différentes courses de l'appareil 1 suivant l'axe (X-X).

## Revendications

1. Dispositif de suspension et de guidage en translation pour un appareil (1) destiné à être déplacé, parallèlement à un axe longitudinal (X-X), ledit dispositif comportant :
- un support fixe (2) ;
- au moins une paire d'éléments de suspension (4A, 4B) espacés suivant ledit axe longitudinal (X-X) et agencés au moins sensiblement transversalement audit axe (X-X) en étant souples parallèlement audit axe (X-X), chacun desdits éléments de suspension (4A, 4B) étant constitué d'au moins une paire de lames (5A, 5B ; 6A, 6B) et, pour chaque paire de lames, une extrémité de l'une desdites lames étant solidaire dudit support (2) et une extrémité de l'autre desdites lames étant reliée audit appareil (1) ; et
- des moyens d'actionnement commandables (10) destinés à exercer, sur lesdits éléments de suspension, un effort parallèlement audit axe longitudinal (X-X),
**caractérisé en ce que**, pour chaque paire de lames (5A, 5B ; 6A, 6B), les autres extrémités desdites lames de ladite paire sont rendues solidaires l'une de l'autre par un organe respectif (9A ou 9B).

2. Dispositif selon la revendication 1,
**caractérisé en ce que**, pour chaque paire de lames de chaque élément de suspension (4A, 4B), une desdites lames (5A, 6A) se présente sous la forme de deux branches dont l'extrémité inférieure (5A.1, 6A.1) de chacune d'entre elles est fixée audit support (2), tandis que l'extrémité inférieure (5B.1, 6B.1) de l'autre desdites lames (5B, 6B), en une pièce, est fixée à l'extrémité d'une patte (8) solidaire dudit appareil (1).

3. Dispositif selon la revendication 2,
**caractérisé en ce que** l'extrémité inférieure (5A.1, 6A.1) de chacune desdites branches est encastrée dans une pièce d'appui respective (7), liée audit support (2).

4. Dispositif selon la revendication 2 ou la revendication 3,
**caractérisé en ce que** les branches desdites premières lames (SA, 6A) sont reliées, à leurs extrémités supérieures (5A.2, 6A.2), par une lame transversale (9A, 9B) solidarisant ces dernières entre elles, ainsi qu'à l'extrémité supérieure (5B.2, 6B.2) desdites secondes lames (5B, 6B).

5. Dispositif selon l'une quelconque des revendications 1 à 4,
**caractérisé en ce que** chacun desdits éléments de suspension (4A, 4B) est constitué par deux paires desdites lames (5A, 5B ; 6A, 6B), agencées de façon symétrique par rapport au plan longitudinal médian de l'ensemble formé par les deux dites paires de lames en condition de repos desdits moyens d'actionnement (10), et **en ce que** les extrémités supérieures, solidaires l'une de l'autre, de chaque paire de lames dudit ensemble, sont reliées par un élément de solidarisation (11) travaillant en traction/compression.

6. Dispositif selon la revendication 4 et la revendication 5,
**caractérisé en ce que** ledit élément de solidarisation (11) est constitué de deux lames (11A, 11B) dont la largeur s'étend parallèlement à l'axe (X-X), reliant les extrémités supérieures et inférieures, respectivement, desdites lames transversales (9A, 9B).

7. Dispositif selon la revendication 5 ou la revendication 6,
**caractérisé en ce que** chaque élément de suspension (4A, 4B) présente, en condition de repos desdits moyens d'actionnement (10), une forme générale de W renversé.

8. Dispositif selon la revendication 7,
**caractérisé en ce que** chaque branche extérieure de l'élément de suspension en forme de W renversé est encastrée dans une pièce d'appui respective (7) liée audit support (2), tandis que les branches intérieures sont fixées, en commun, à l'extrémité d'une patte (8) solidaire dudit appareil (1).

9. Dispositif selon l'une quelconque des revendications 1 à 8,
**caractérisé en ce que** le point d'application de l'effort exercé par lesdits moyens d'actionnement (10) sur les lames élastiques s'exerce au moins sensiblement sur l'axe (X-X), de sorte que, si (L) est la distance séparant les extrémités supérieures et inférieures d'encastrement desdites lames, l'axe (X-X) est situé de façon telle que, au moins sensiblement, la distance séparant les extrémités supérieures d'encastrement de l'axe (X-X) est égale à la distance séparant les extrémités inférieures d'encastrement dudit axe, c'est-à-dire à (L/2).

10. Appareil destiné à être déplacé, parallèlement à son axe longitudinal (X-X), par rapport à un support fixe,
**caractérisé en ce qu'**il est équipé d'un dispositif de suspension et de guidage en translation selon l'une quelconque des revendications 1 à 9.

## Patentansprüche

1. Aufhängungs- und translatorische Führungsvorrichtung für ein Gerät (1), das parallel zu einer Längsachse (X-X) verschoben werden soll, wobei die Vorrichtung Folgendes umfasst:
- eine feste Halterung (2);
- mindestens ein Paar Aufhängungselemente (4A, 4B), die entlang der Längsachse (X-X) in einem bestimmten Abstand und mindestens fast quer zur genannten Achse (X-X) angeordnet sind, indem sie parallel zur Achse (X-X) flexibel sind, wobei jedes der Aufhängungselemente (4A, 4B) aus mindestens einem Paar Platten (5A, 5B; 6A, 6B) besteht und bei jedem Plattenpaar ein Ende einer der Platten fest mit der Halterung (2) und ein Ende der anderen der genannten Platten mit dem Gerät (1) verbunden ist; und
- steuerbare Betätigungsmittel (10), die an den Aufhängungselementen parallel zur Längsachse (X-X) eine Kraft ausüben sollen,
**dadurch gekennzeichnet, dass** bei jedem Plattenpaar (5A, 5B; 6A, 6B) die anderen Enden der Platten des Paars durch ein entsprechendes Organ (9A oder 9B) fest miteinander verbunden werden.

2. Vorrichtung nach Anspruch 1,
**dadurch gekennzeichnet, dass** bei jedem Plattenpaar eines jeden Aufhängungselements (4A, 48) eine der Platten (5A, 6A) in Form von zwei Schenkeln vorliegt, von denen jedes untere Ende (5A.1, 6A.1) an der Halterung (2) befestigt ist, wohingegen das untere Ende (5B.1, 6B.1) der anderen, aus einem Teil bestehenden Platte (5B, 6B) am Ende einer Pratze (8) befestigt ist, die fest mit dem Gerät (1) verbunden ist.

3. Vorrichtung nach Anspruch 2,
**dadurch gekennzeichnet, dass** das untere Ende (5A.1, 6A.1) jedes Schenkels jeweils in ein mit der genannten Halterung (2) verbundenes Auflageteil (7) eingebaut ist.

4. Vorrichtung nach Anspruch 2 oder Anspruch 3,
**dadurch gekennzeichnet, dass** die Schenkel der ersten Platten (5A, 6A) an ihren oberen Enden (5A.2, 6A.2) durch eine Querplatte (9A, 9B), die letztere fest miteinander verbindet, sowie am oberen Ende (5B.2, 6B.2) der genannten zweiten Platten verbunden sind.

5. Vorrichtung nach irgendeinem der Ansprüche 1 bis 4,
**dadurch gekennzeichnet, dass** jedes der Aufhängungselemente (4A, 4B) durch zwei Paare der Platten (5A, 5B; 6A, 6B) gebildet wird, die symmetrisch zur mittleren Längsebene der Einheit angeordnet sind, die durch die beiden genannten Plattenpaare in Ruhestellung des Betätigungsmittel (10) gebildet wird, und dadurch, dass die oberen, fest miteinander verbundenen Enden jedes Plattenpaars der Einheit durch ein Verbindungselement (11) verbunden sind, das mit Zug/Druck wirkt.

6. Vorrichtung nach Anspruch 4 und Anspruch 5,
**dadurch gekennzeichnet, dass** das Verbindungselement (11) aus zwei Platten (11A, 11B) besteht, deren Breite parallel zur Achse (X-X) verläuft, die das obere beziehungsweise das untere Ende der Querplatten (9A, 98) verbinden.

7. Vorrichtung nach Anspruch 5 oder Anspruch 6,
**dadurch gekennzeichnet, dass** jedes Aufhängungselement (4A,4B) in Ruhestellung der Betätigungsmittel (10) eine allgemeine Form eines umgedrehten W besitzt.

8. Vorrichtung nach Anspruch 7,
**dadurch gekennzeichnet, dass** jeder Außenschenkel des Aufhängungselements in Form eines umgedrehten W in ein entsprechendes, mit der Halterung (2) verbundenes Auflageteil (7) eingebaut ist, wohingegen die Innenschenkel beide am Ende einer Pratze (8) befestigt sind, die mit dem Gerät (1) ein Stück bildet.

9. Vorrichtung nach irgendeinem der Ansprüche 1 bis 8,
**dadurch gekennzeichnet, dass** der Angriffspunkt der von dem Betätigungsmittel (10) auf die elastischen Platten ausgeübten Kraft mindestens ungefähr auf der Achse (X-X) liegt, sodass die Achse (X-X), wenn (L) die Entfernung ist, die das obere Einbauende vom unteren Einbauende der Platten trennt, so liegt, dass die Entfernung, die die oberen Einbauenden von der Achse (X-X) trennt, ungefähr gleich der Entfernung ist, die die unteren Einbauenden von der Achse trennt, das heißt gleich (L/2).

10. Gerät, das parallel zu seiner Längsachse (X-X) in Bezug auf eine feste Halterung verschoben werden soll, **dadurch gekennzeichnet, dass** es mit einer Aufhängungs- und translatorischen Führungsvorrichtung nach irgendeinem der Ansprüche 1 bis 9 ausgerüstet ist.

## Claims

1. Device for the suspension and translational guidance of an item of apparatus (1) intended to be displaced, parallel to a longitudinal axis (X-X), said device having:
- a stationary support (2);
- at least one pair of suspension elements (4A, 4B) spaced along said longitudinal axis (X-X) and arranged at least roughly transversely to said axis (X-X) while being flexible parallel to said axis (X-X), each of said suspension elements (4A, 4B) consisting of at least one pair of blades (5A, 5B; 6A, 6B) and, for each pair of blades, one end of one of said blades being connected to said support (2) and one end of the other of said blades being connected to said item of apparatus (1); and
- controllable actuating means (10) intended to exert a force parallel to said longitudinal axis (X-X) on said suspension elements, **characterized in that**, for each pair of blades (5A, 5B; 6A, 6B), the other ends of said blades of said pair are secured to each other by a respective member (9A or 9B).

2. Device according to Claim 1, **characterized in that**, for each pair of blades of each suspension element (4A, 4B), one of said blades (5A, 6A) is in the form of two branches, the lower end (5A.1, 6A.1) of each of which is fixed to said support (2) while the lower end (5B.1, 6B.1) of the other of said blades (5B, 6B), which is made as a single piece, is fixed to the end of a lug (8) secured to said item of apparatus (1).

3. Device according to Claim 2, **characterized in that** the lower end (5A.1, 6A.1) of each of said branches is built into a respective foot (7) attached to said support (2).

4. Device according to Claim 2 or Claim 3, **characterized in that** the branches of said first blades (5A, 6A) are connected at their upper ends (5A.2, 6A.2) by a transverse blade (9A, 9B) securing these upper ends to each other, and securing them to the upper end (5B.2, 6B.2) of said second blades (5B, 6B).

5. Device according to any one of Claims 1 to 4, **characterized in that** each of said suspension elements (4A, 4B) consists of two pairs of said blades (5A, 5B; 6A, 6B) arranged symmetrically with respect to the longitudinal mid-plane of the assembly formed by the two said pairs of blades when the actuating means (10) are in the rest condition, and **in that** the upper ends, which are secured to each other, of each pair of blades of said assembly are connected by a securing element (11) which works in tension/compression.

6. Device according to Claim 4 and Claim 5, **characterized in that** said securing element (11) consists of two blades (11A, 11B), the width of which runs parallel to the axis (X-X) connecting the upper and lower ends, respectively, of said transverse blades (9A, 9B).

7. Device according to Claim 5 or Claim 6, **characterized in that** each suspension element (4A, 4B) has the overall shape of an inverted W when said actuating means (10) are in the rest condition.

8. Device according to Claim 7, **characterized in that** each outer branch of the suspension element which is in the shape of an inverted W is built into a respective foot (7) attached to said support (2), while the inner branches are fixed, both together, to the end of a lug (8) secured to said item of apparatus (1).

9. Device according to any one of Claims 1 to 8, **characterized in that** the point at which the force exerted by said actuating means (10) is applied to the elastic blades is at least roughly along the axis (X-X) so that, if (L) is the distance separating the built-in upper and lower ends of said blades, the axis (X-X) is situated in such a way that the distance separating the built-in upper ends from the axis (X-X) is at least roughly equal to the distance separating the built-in lower ends from said axis, namely to (L/2).

10. Item of apparatus intended to be displaced, parallel to its longitudinal axis (X-X), with respect to a stationary support, **characterized in that** it is equipped with a device for suspension and translational guidance according to any one of Claims 1 to 9.
